# EUROPÄISCHE PATENTSCHRIFT

(11) **EP 1 998 928 B1**
(45) Veröffentlichungstag und Bekanntmachung des Hinweises auf die Patenterteilung: **14.10.2009**
(21) Anmeldenummer: 06723106.8
(22) Anmeldetag: 24.02.2006
(51) Int. Cl.: B23K 26/03, B23K 26/04, B23K 26/06, B23K 26/067, G02B 27/14

(54) **LASERBEARBEITUNGSANLAGE MIT EINER SPIEGELANORDNUNG MIT EINEM ZWEI SPIEGELBEREICHE UND EINE SCHATTENZONE AUFWEISENDEN SPIEGEL**
LASER MACHINING UNIT WITH A MIRROR ARRANGEMENT COMPRISING A MIRROR HAVING TWO MIRROR REGIONS AND A SHADOW ZONE
INSTALLATION DE TRAITEMENT AU LASER AVEC UN ENSEMBLE MIROIRS DOTÉ D'UN MIROIR COMPORTANT DEUX ZONES RÉFLÉCHISSANTES ET UNE ZONE D'OMBRE

(43) Veröffentlichungstag der Anmeldung: 10.12.2008
(73) Patentinhaber: TRUMPF Werkzeugmaschinen GmbH + Co. KG, 71254 Ditzingen (DE)
(72) Erfinder: PFITZNER, Dieter, 71263 Weil der Stadt (DE)
(74) Vertreter: Kohler Schmid Möbus
(86) Internationale Anmeldenummer: PCT/EP2006/001723
(87) Internationale Veröffentlichungsnummer: WO 2007/098777

(56) Entgegenhaltungen:
- EP-A- 0 098 048
- EP-A1- 0 468 328
- DE-A1- 4 129 239
- DE-A1- 10 222 786
- DE-A1- 19 852 302
- JP-A- 2000 135 583
- US-A1- 2003 203 602

## Beschreibung

Die vorliegende Erfindung betrifft eine Laserbearbeitungsanlage mit einer Spiegelanordnung mit einem Spiegel zur Fokussierung und/oder Umlenkung der Laserstrahlung auf ein Werkstück gemäß dem Oberbegriff des Anspruchs 1 (siehe, z.B., DE 198 52 302).

Derartige Spiegelanordnungen sind durch ihre Verwendung bei Laserbearbeitungsanlagen allgemein bekannt.

Eine bekannte Möglichkeit zur Integration von Sensoren in einen Laserbearbeitungskopf stellt die Verwendung eines Lochspiegels dar. Der Lochspiegel hat aber den Nachteil, dass durch die Ausbildung des Lochs Laserstrahlung verloren geht. Es muss z.B. eine Strahlfalle für die im Loch hängen bleibende Laserstrahlung in den Laserbearbeitungskopf integriert werden. Insbesondere bei Verwendung von Lasern mit Gaußmode ist der Lochspiegel schlecht geeignet.

Eine weitere bekannte Möglichkeit zur Integration von Sensoren in einen Laserbearbeitungskopf stellt ein so genannter Scraperspiegel dar. Hier wird die Lichtstrahlung ringförmig am Rande des Spiegels erfasst und auf einen optischen Sensor fokussiert. Bei ortsauflösenden Sensoren, wie z. B. Zeilenkameras oder Matrixkameras, hat dies eine schlechte Abbildungsqualität und eine geringe Schärfentiefe zur Folge.

Der Erfindung liegt die Aufgabe zu Grunde, eine verbesserte Integration von Sensoren oder optischen Komponenten in einen) Laserbearbeitungskopf einer Laserbearbeitungsanlage durchführen zu können.

Eine Laserbearbeitungsanlage gemäß der Erfindung ist im Anspruch 1 definiert.

In der Schattenzone wird ein Sensor oder dergleichen angeordnet. Bevorzugt ist es, eine Durchgangsöffnung vorzusehen. In oder hinter einer Öffnung in diesem Spiegelbereich wird also eine optische Komponente im Schatten der Laserstrahlung angeordnet beispielsweise optische Sensoren, Messlichtquellen und Kameras unterschiedlichster Art. Es ist denkbar, an dieser Stelle beliebige Komponenten für die Überwachung oder Beobachtung der Laserbearbeitung zu positionieren.

Die Erfindung eignet sich für alle Laserstrahlen, die mit Spiegeln umgelenkt werden. Da CO₂-Laserstrahlen häufig mit Spiegeln (meist mit- Kupferspiegeln) umgelenkt und fokussiert werden, sind die Vorteile hier besonders deutlich. Der erfindungsgemäße Spiegel kann im Prinzip an jeder Stelle in der Strahlführung einer Laserbearbeitungsanlage platziert werden. Je nach Aufgabe der optischen Komponenten kann der erfindungsgemäße Spiegel sinnvoll angeordnet werden. Die Erfindung ist insbesondere für CO₂-Laser geeignet, aber nicht auf deren Verwendung beschränkt. Ebenso ist es denkbar, die erfindungsgemäße Ausbildung des Spiegels auf alle Spiegelarten anzuwenden.

Gemäß der Erfindung weist der Spiegel drei Spiegelbereiche auf, von denen zwei zur Fokussierung und ein zwischen den beiden Spiegelbereichen angeordneter dritter Spiegelbereich zur Anordnung im Schatten der Laserstrahlung ausgebildet sind. Hierdurch wird der fokussierte Laserstrahl in zwei fokussierte Teilstrahlen aufgeteilt. Die Komponente für die Überwachung oder Beobachtung der Laserbearbeitung wird zwischen den Teilstrahlen angeordnet. Eine optimale Abschirmung der Komponente vor der Laserstrahlung ist hierdurch gegeben.

Wenn der eine Spiegelbereich eine Durchgangsbohrung aufweist, hinter der die optischen Komponenten zur Überwachung der Laserbearbeitung angeordnet sind, können diese die Laserbearbeitung sehr gut beobachten und sind trotzdem optimal geschützt.

Zum Schutz vor der Laserstrahlung kann die Durchgangsbohrung durch ein Schutzglas abgedeckt sein.

Bevorzugte Ausführungsbeispiele der Erfindung sind in der Zeichnung schematisch dargestellt und werden anhand der Figuren der Zeichnung nachfolgend beschrieben. Es zeigt:
- Figur 1: eine Laserbearbeitungsanlage,
- Figur 2a: den Aufbau einer Spiegelanordnung für die Laserbearbeitungsanlage gemäß der Erfindung;
- Figur 2b: eine vergrößerte Ansicht eines Spiegels gemäß Figur 2a;
- Figur 2c: eine vergrößerte Ansicht der fokussierten Strahlung mithilfe des Spiegels gemäß Figur 2a;
- Figur 3: den Aufbau einer Spiegelanordnung, die nicht Gegenstand der Erfindung ist;
- Figur 4: den Aufbau einer Spiegelanordnung, die nicht Gegenstand der Erfindung ist;
- Figur 5: den Aufbau einer Spiegelanordnung, die nicht Gegenstand der Erfindung ist.

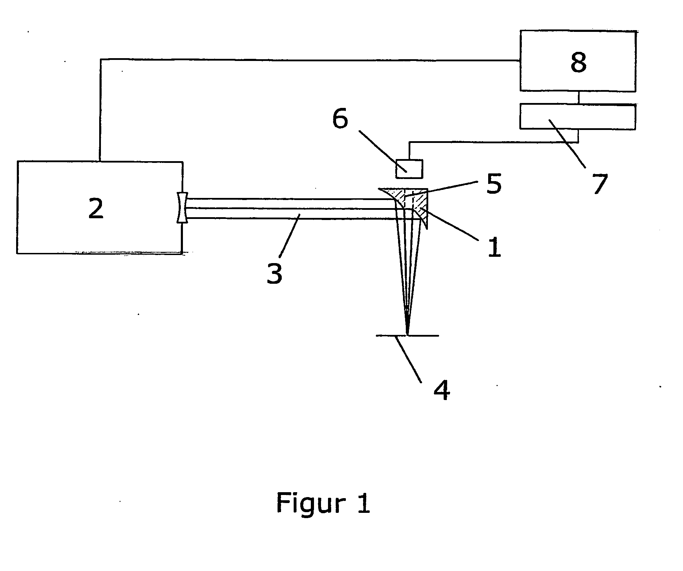

Aus der Figur 1 ist die Integration eines Spiegels 1 in das Konzept einer erfindungsgemäßen Laserbearbeitungsanlage, beispielsweise zum Laserschweißen, ersichtlich. Eine in einem Laseraggregat 2 erzeugte Laserstrahlung 3 wird mithilfe des Spiegels 1 auf ein Werkstück 4 fokussiert. Der Spiegel 1 weist eine Durchgangsbohrung 5 auf, um eine Beobachtung der Bearbeitung mithilfe eines Sensors 6 zu ermöglichen. Signale des Sensors 6 werden an eine Auswerteeinrichtung 7 übertragen, welche mit einer Maschinensteuerung 8 zur Steuerung des Laseraggregats 2 verbunden ist.

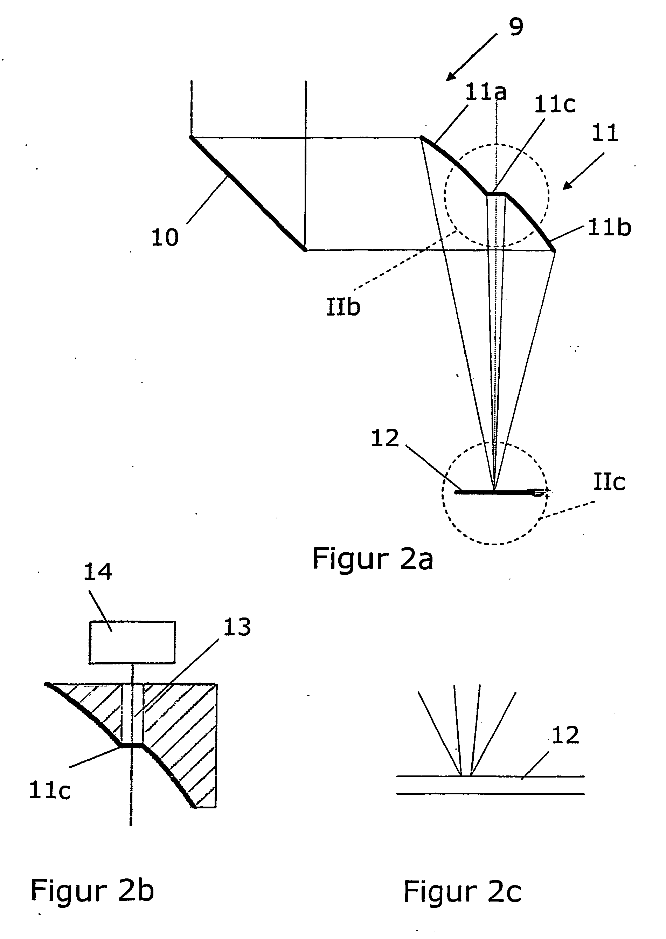

Gemäß der Figur 2a umfasst eine Spiegelanordnung 9 der Laserbearbeitungsanlage einen Umlenkspiegel 10 und einen Fokussierspiegel 11. Die Laserstrahlung wird mithilfe des Umlenkspiegels 10 in Richtung des Fokussierspiegels 11 umgelenkt und mithilfe des Fokussierspiegels 11 auf ein Werkstück 12 fokussiert.

Der Fokussierspiegel 11 weist einen ersten und einen zweiten Spiegelbereich 11a und 11b auf, welche zur Fokussierung der Laserstrahlung ausgebildet sind. Zwischen den beiden Spiegelbereichen 11a und 11b ist ein dritter Spiegelbereich 11c vorgesehen, welcher parallel zu dem umgelenkten Laserstrahl angeordnet ist, so dass dieser Bereich - vor der Laserstrahlung abgeschirmt - sozusagen im Schatten liegt. Der dritte Spiegelbereich 11c trägt weder zur Strahlenumlenkung noch zur Fokussierung bei. Der dritte Spiegelbereich 11c beeinflusst die Laserstrahlung also nicht.

Gemäß Figur 2b ist der dritte Spiegelbereich 11c mit einer Durchgangsbohrung 13 versehen, hinter der ein Sensor 14 angeordnet ist. Dieser Sensor 14 ist zur Überwachung von Prozessen der Laserbearbeitung, beispielsweise zur Nahtverfolgung oder zur Prozesskontrolle durch Überwachung des Schmelzbades oder der Geometrie der Schweißnaht, geeignet und vor in Richtung des Werkstücks gerichteter; auftretender Laserstrahlung geschützt.

Durch die Aufteilung des Fokussierspiegels 11 in zwei fokussierende Spiegelbereiche 11a und 11b und der versetzten Anordnung der Spiegelbereiche 11a und 11b kommt es zu einer Strahlaufteilung. An der Werkstückoberfläche können zwei nebeneinander liegende Fokusse entstehen, wie in Figur 2c dargestellt. Alternativ dazu können die Oberflächen der beiden Teilspiegelbereiche so geformt sein, dass die beiden Fokusse der Teilstrahlen zusammenfallen.

Die an der Stufe (dritter Spiegelbereich 11c) des Fokussierspiegels 11 entstehende Schattenzone wird zur Anordnung von Sensoren oder Messlichtquellen verwendet. An der Stufe geht keine Laserstrahlung verloren. Der Fokussierspiegel 11 funktioniert unabhängig vom Mode des Lasers.

An der Stufe werden zur Durchführung von optischen Messungen an der Werkstückoberfläche folgende Sensoren angeordnet. Photodiode, PSD, CCD-Kamera oder CMOS-Kamera. Als Messlichtquelle zur Projektion eines flächigen Auflichts oder einer/mehrerer Linien werden zum Beispiel LEDs oder Laserdioden verwendet. Zur Anordnung mehrerer Sensoren, Messlichtquellen oder dergleichen können analog zur Durchgangsbohrung 13 mehrere derartige Bohrungen vorgesehen sein. Die optischen Komponenten werden nicht direkt in dem abgeschatteten Spiegelbereich angeordnet. Die Durchgangsbohrungen dienen dazu, dass hinter dem Spiegel optische-Komponenten angeordnet werden können, deren Strahlenverlauf koaxial oder unter einem geringen Winkel zum Laserstrahl verläuft. Die optischen Komponenten sind durch die Anordnung gut vor der in Richtung des Werkstücks gerichteten Laserstrahlung geschützt. Die Komponenten können vor der vom Werkstück rückreflektierten Strahlung durch ein Schutzglas geschützt werden. Das Schutzglas kann aus einem geeigneten Material bestehen, welche die Laserstrahlung absorbiert und das Messlicht transmittiert. Das Schutzglas kann auch aus einem Material mit einer dichroitischen Beschichtung bestehen, welche bewirkt, dass die rückreflektierte Laserstrahlung reflektiert und das Messlicht transmittiert wird.

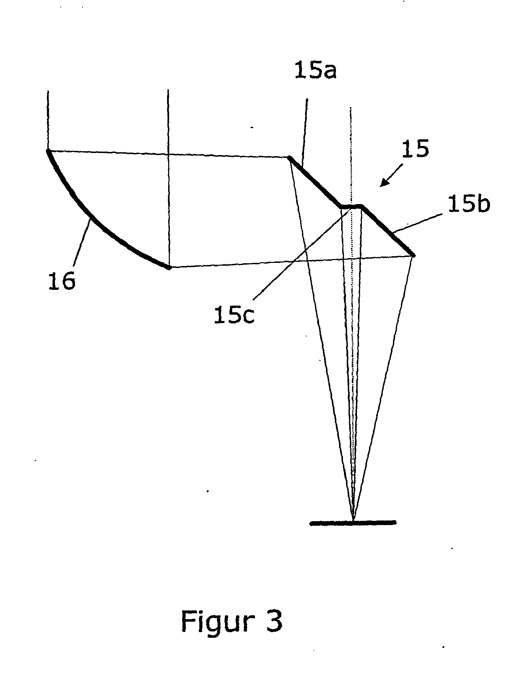

Gemäß Figur 3 weist ein Umlenkspiegel 15, das nicht Gegenstand der Erfindung ist, eine Spiegelbereiche 15a bis 15c unter Ausbildung einer Stufe auf. Zur Fokussierung ist ein Fokussierspiegel 16 vorgesehen.

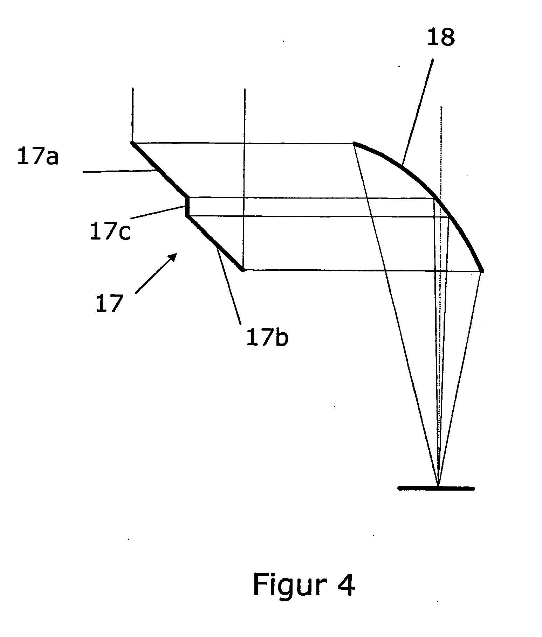

Gemäß Figur 4 kann ein Umlenkspiegel 17, das nicht Gegenstand der Erfindung ist, mit den Spiegelbereich 17a bis 17c unter Ausbildung einer Stufe in den Strahlengang auch vor dem Fokussierspiegel 19 angeordnet sein.

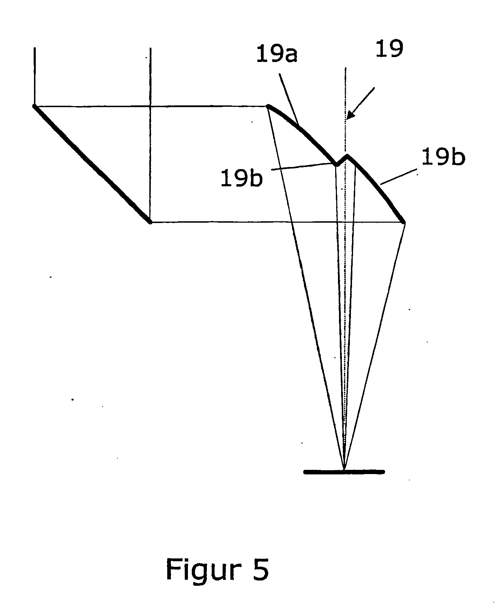

Gemäß Figur 5 weist ein Fokussierspiegel 19, das nicht Gegenstand der Erfindung ist, drei Spiegelbereiche 19a bis 19c unter Ausbildung eine Stufe auf, wobei der Spiegelbereich 19b nicht parallel zur Laserstrahlung, sondern quer zur Laserstrahlung angeordnet ist.

## Patentansprüche

1. Laserbearbeitungsanlage mit einer Spiegelanordnung mit mindestens einem Spiegel (1, 11) zur Umlenkung und/oder Fokussierung der Laserstrahlung auf ein Werkstück (4) und mit einem Sensor (14), einer Kamera oder einer Messlichtquelle zum Überwachen der Laserbearbeitung an dem Werkstück (4),
**dadurch gekennzeichnet,**
**dass** der Spiegel (1, 11) drei Spiegelbereiche (11a, 11b, 11c) aufweist, von denen der mittlere Spiegelbereich (11c) parallel oder quer zu der auf den Spiegel (11) auftreffenden Laserstrahlung zur Ausbildung einer Schattenzone angeordnet ist und die beiden äußeren bei dem mittleren Bereich (11c) getrennten Spiegelbereiche (11a, 11b) zur Fokussierung und/oder Umlenkung der Laserstrahlung vorgesehen sind, und dass der Sensor (14), die Kamera oder die Messlichtquelle in der Schattenzone angeordnet ist.

2. Laserbearbeitungsanlage nach Anspruch 1, **dadurch gekennzeichnet, dass** der mittlere Spiegelbereich (11c) eine Durchgangsöffnung (5, 13) aufweist, hinter der der Sensor (14), die Kamera oder die Messlichtquelle angeordnet ist.

3. Laserbearbeitungsanlage nach Anspruch 1 oder 2, **dadurch gekennzeichnet, dass** die beiden äußeren Spiegelbereiche (11a, 11b) zur Fokussierung der Laserstrahlung vorgesehen sind und einen gemeinsamen Brennpunkt besitzen.

4. Laserbearbeitungsanlage nach einem der vorhergehenden Ansprüche, **dadurch gekennzeichnet, dass** ein Schutzglas im Bereich der Schattenzone vorgesehen ist.

## Claims

1. Laser machining unit comprising a mirror arrangement having at least one mirror (1, 11) for deflecting and/or focusing the laser radiation onto a workpiece (4) and comprising a sensor (14), a camera or a measuring light source for monitoring the laser machining operation on the workpiece (4),
**characterised in**
**that** the mirror (1, 11) has three mirror regions (11 a, 11 b, 11c) the middle mirror region (11c) of which is arranged parallel or transversely to the laser radiation incident on the mirror (11) in order to form a shadow zone and the two outer mirror regions (11a, 11 b) of which, which are separated at the middle region (11c), are provided for focusing and/or deflecting the laser radiation, and the sensor (14), the camera or the measuring light source is disposed in the shadow zone.

2. Laser machining unit according to claim 1, **characterised in that** the middle mirror region (11c) has a passage (5, 13) behind which the sensor (14), the camera or the measuring light source is disposed.

3. Laser machining unit according to claim 1 or 2, **characterised in that** the two outer mirror regions (11a, 11 b) are provided for focusing the laser radiation and have a common focal point.

4. Laser machining unit according to any one of the preceding claims, **characterised in that** a glass guard is provided in the region of the shadow zone.

## Revendications

1. Installation d'usinage par laser avec un agencement de miroirs comprenant au moins un miroir (1, 11) pour dévier et/ou focaliser le rayonnement laser sur une pièce (4) et avec un capteur (14) d'une caméra ou d'une source de lumière de mesure pour surveiller l'usinage par laser de la pièce (4),
**caractérisée en ce**
**que** le miroir (1, 11) présente trois parties de miroir (11a, 11b, 11c) dont la partie centrale de miroir (11c) est disposée parallèlement ou transversalement au rayonnement laser arrivant sur le miroir (11) pour former une zone d'ombre et les deux parties extérieures de miroir (11a, 11b) séparées par la zone centrale (11c) sont prévues pour focaliser et/ou dévier le rayonnement laser, et que le capteur (14), la caméra ou la source de lumière de mesure est disposé(e) dans la zone d'ombre.

2. Installation d'usinage par laser selon la revendication 1, **caractérisée en ce que** la partie centrale de miroir (11c) présente une ouverture de passage (5, 13) derrière laquelle est disposé(e) le capteur (14), la caméra ou la source de lumière de mesure.

3. Installation d'usinage par laser selon la revendication 1 ou 2, **caractérisée en ce que** les deux parties extérieures de miroir (11a, 11b) sont prévues pour focaliser le rayonnement laser et possèdent un foyer commun.

4. Installation d'usinage par laser selon l'une des revendications précédentes, **caractérisée en ce qu'**un verre protecteur est prévu dans la région de la zone d'ombre.
